# EUROPEAN PATENT SPECIFICATION

(11) **EP 3 647 641 B1**
(45) Date of publication and mention of the grant of the patent: **28.06.2023**
(21) Application number: 18204220.0
(22) Date of filing: 02.11.2018
(51) Int. Cl.: F16L 3/22, F16L 39/00

(54) **A TORQUE-RESISTING HOSE MOUNTING**
DREHMOMENTBESTÄNDIGE SCHLAUCHBEFESTIGUNG
MONTAGE DE TUYAU RÉSISTANT AU COUPLE

(43) Date of publication of application: 06.05.2020
(73) Proprietor: CNH Industrial Belgium NV, 8210 Zedelgem (BE)
(72) Inventor: OLIEUX, Jozef, 9520 Bavegem (BE)
(74) Representative: CNH Industrial IP Department

(56) References cited:
- EP-A1- 3 379 123
- WO-A1-2018/184105
- US-A1- 2015 247 591

## Description

### Background of the Invention

The invention relates to a torque-resisting hose mounting.

Typically a fluid power circuit employed in a vehicle includes a number of flexible hoses that are used to convey pressurized fluid in the power circuit. In a hydraulic power circuit, as is often employed in vehicle engineering, the hoses may be described as semi-rigid. Thus they are relatively thick-walled, sometimes armoured, hoses that tolerate the fluid pressures generated in the circuit.

The pressure of fluid in a vehicle hydraulic circuit may change abruptly. Hydraulic hoses while stiffer than some other designs of hose are nonetheless sufficiently flexible that when a significant change of the pressure of hydraulic fluid occurs the hoses flex, expand or contract diametrically, and/or lengthen or shorten, under the influence of the pressure of the hydraulic fluid.

The design of a hydraulic circuit used in a vehicle may include measures aimed at avoiding problems caused by such pressure changes. Thus for example a hydraulic hose may be designed to include a bend that accommodates changes in the length of a hose; and parts of the hose that might flex or expand when fluid pressure inside it increases may be routed to avoid fouling or chafing on other parts of the vehicle.

Such steps can be effective over the length of a hose away from its ends; but problems arise at the ends of a hose. This is because each end of a hydraulic hose is connected to another component, such as a hose union or a hose termination or cap.

Often the hose unions or terminations are not fixed to rigid parts of the vehicle and instead are supported essentially by the hoses that are connected to them.

A pair of hoses may be connected respectively to the ends of a double-acting hydraulic actuator such as a ram or other extensible and retractile element. Operation of the actuator to extend or retract under the influence of the pressurized fluid in the hoses causes the pressure in one hose to increase while the pressure in the other hose decreases. At the ends of the hoses remote from the actuator such differential pressurizing leads to the generation of torques in the components such as unions and terminations. The torques cause the unions or terminations to rotate. This in turn induces leaks and other failures in the connections between the hoses and the unions or terminations.

Such modes of failure are significantly problematic, as they can compromise the performance of e.g. a double-acting actuator connected to the hoses. Depending on the nature and purpose of the actuator this could be merely inconvenient, or it may have a seriously deleterious effect on vehicle performance or safety.

Leaks of hydraulic fluid also necessitate replenishment of the fluid power system; may lead to slip accidents or fires; and create a need for cleaning of the internal parts of a vehicle. Indeed some hydraulic fluids are chemically aggressive and may attack the materials of other parts of a vehicle, so cleaning of leaked hydraulic fluid is important even if this means dismantling part of the vehicle. Also virtually all hydraulic fluids are toxic to humans and animals and should not be allowed to spill outside a vehicle. This is an especially important requirement if the vehicle is intended for use on a farm or in an environmentally sensitive location.

An aim of the invention is to reduce or eliminate one or more problems of prior art fluid power hose arrangements as explained.

Prior art solutions to the problems include those disclosed in publications nos US 5316346 A, DE8801061 U1, US 3999784 B and CN 204547827 U. All these publications describe arrangements for bracing a tube or pipe mounting. The use of bracing or fixing arrangements is costly in terms of engineering complexity, parts inventories and machine servicing time.

WO 2018/184105 A1 discloses a support assembly for swivellably supporting hydraulic lines. A series of hydraulic lines is clamped in an array of clamp assemblies. The array is in turn supported in a frame that is swivellably supported in a gimbal arrangement.

EP 3379123 A1 discloses clamps, for a series of hoses, that are secured to parts of a vehicle frame. The frame interconnects pairs of the clamps in a non-rigid manner.

US 2015/0247591 A1 discloses a two-sided clamp arrangement in which sets of flexible hoses are clamped on opposite sides of an inner member.

### Summary of the Invention

According to the invention in a broad aspect there is provided a torque-resisting hose mounting for attenuating torque arising when at least first and second flexible, fluid-carrying hoses each connected in a fluid-communicating manner with a pipe fitting are differentially pressurized, characterized in that the torque-resisting hose mounting comprises:
a. a first pipe fitting to which a first flexible, fluid-carrying hose is directly or indirectly connectable;
b. a second pipe fitting to which a second flexible, fluid-carrying hose is directly or indirectly connectable;
c. a first clamp comprising a first pair of clamp jaws for gripping the first, flexible fluid-carrying hose or a first extension member connected thereto;
d. a second clamp comprising a second pair of clamp jaws for gripping the second rigid pipe flexible fluid-carrying hose or a second extension member connected thereto; and
e. a rigidifying member interconnecting the first and second clamps, characterised in that each jaw (34, 36, 38, 39) is essentially cuboidal in shape with a substantially rectangular face of the cuboid juxtaposed to a counterpart rectangular face of the other jaw of the respective pair.

Such a mounting advantageously prevents or at least reduces problems of the kinds outlined above, without requiring that any part of the mounting is secured to or otherwise braced by a rigid feature such as a machine frame or vehicle chassis. The torque attenuation can arise partly because the connection between the first and second clamps permits oppositely acting torques, generated respectively by the first and second hoses as a double-acting actuator is energised, to cancel one another out, or largely cancel one another out. As a result the mounting remains essentially stationary even though it is not braced in any way.

The mounting also is effective when only one of the pair of flexible, fluid-carrying hoses is pressurized or otherwise subjected to a change in the pressure of the fluid it carries. In such a situation the rigid connection between the first and second clamps reduces or prevents rotation of the clamp that is connected to the hose in question.

The rigidifying member may be e.g. a metal or other rigid material plate.

Preferably the first extension when present includes a first rigid pipe connecting the first pipe fitting and the first hose in fluid-transferring communication with one another; and the second extension when present includes a second rigid pipe connecting the second pipe fitting and the second hose in fluid-transferring communication with one another.

In preferred embodiments of the invention the first rigid pipe is of lesser diameter than the first hose and the second rigid pipe is of lesser diameter than the second hose.

These arrangements permit reliable securing of the clamps. Connections between the flexible hoses and the rigid pipes may as needed be employed in order to accommodate the indicated diameter variations.

Further preferably the first clamp includes a first pair of resiliently deformable clamp jaws between which the first rigid pipe is gripped and defining a through-going circular cross-section bore for receiving the first rigid pipe; and the second clamp includes a second pair of resiliently deformable clamp jaws between which the second rigid pipe is gripped and defining a through-going, elongate slot for receiving the second rigid pipe.

Such features of the clamps permit the hose mounting to accommodate manufacturing and tolerancing variations in the components of a hose or pipe network in which the mounting is used. In particular the slot allows to take account of the point at which the second hose or its associated extension passes between the jaws of the second clamp to suit the precise requirements.

The resulting variability of the part of the second clamp that clamps the second hose or extension also means that the mounting may be used to secure a variety of differing designs of hose or pipe network.

In embodiments described herein preferably the rigidifying member is connected to a respective first side of each of the first and second clamps. This is a convenient arrangement that is quick and easy to assemble and dismantle when required.

Further preferably each of the first and second clamps includes a respective clamp brace juxtaposed to the clamp on the opposite side to the connection of the rigidifying member; and each of the first and second clamps includes a respective fastener extending from one side of the clamp to another secure the clamp brace and the rigidifying member one to the other against the resilient deformability of the clamp and with the clamp trapped therebetween. Such trapping of the clamp in turn traps the flexible fluid-carrying hose or an extension secured thereto on assembly of the parts of the mounting together.

As a result the assembly of the mounting involves a simple series of positive location steps that permit rapid, reliable construction of a hose or pipe network.

One preferred form of fastener is a nut and bolt combination the bolt of which passes through apertures in the rigidifying member, the clamp jaws and the clamp brace to be threadedly received in the nut on the exterior of the mounting. Another example of a fastener that is suitable is a bolt or screw that extends as described above and is threadedly received in a threaded bore formed in or secured to one of the rigidifying member or the clamp brace. Clips, overlocking lever fasteners, screw cramps and various other forms of fastener also are possible.

In preferred embodiments at least one said clamp brace includes at least one side wall extending from the clamp brace towards a said rigidifying member externally of the clamp. Such a feature limits the clamping force that can be applied by each clamp, by reason of the side wall limiting the extent to which the clamp jaws may be compressed together. This in turn protects the clamped hose or extension from being crushed on tightening of the clamp.

In practical embodiments a pair of the side walls may be provided.

Optionally the first and second pipe fittings may be respective pipe terminations. Alternatively the first and second pipe fittings are respective pipe unions. When configured as pipe unions the first and second pipe fittings may be e.g. straight (two-pipe) unions, T-form (three-pipe) unions or cruciform (four-pipe) unions. Other types of unions also are possible within the scope of the invention.

The first and second clamps may be fixedly secured to the rigidifying member when the hose mounting is in an assembled configuration. The rigidifying member can also have a disassembled (or partially assembled) configuration, in which the rigidifying member has a structure that allows the position on the rigidifying member at which the clamps are to be fixedly secured to be variable with respect to each other. This structure may include both round and slotted holes through which fasteners can pass to secure the clamps to the rigidifying member.

Conveniently the first flexible, fluid-carrying hose is connected to provide pressurized fluid to a first end of a double-acting fluid actuator; and the second flexible, fluid-carrying hose is connected to provide pressurized fluid to a second end of the double-acting fluid actuator. However the hoses of the mounting of the invention need not be connected in this manner; and instead can be connected to a wide variety of other parts of a fluid power circuit.

The invention also resides in a hose or pipe network including any first torque-resisting hose mounting according to claim 1, wherein the first pipe fitting is a pipe union to which is additionally connectable a third flexible, fluid-carrying hose; wherein the second pipe fitting is a pipe union to which is additionally connectable a fourth flexible, fluid-carrying hose; and wherein the hose or pipe network includes a second torque-resisting hose mounting comprising:
f. the first pipe fitting;
g. the second pipe fitting;
h. a third clamp for gripping the third rigid pipe or a third extension connected thereto;
i. a fourth clamp for gripping the fourth rigid pipe or a fourth extension connected thereto; and
j. a rigidifying member interconnecting the third and fourth clamps.

Thus the invention extends to a hose or pipe network in which a hose mounting according to the invention effectively is duplicated in order to provide connections for four flexible hoses.

Such an arrangement may reliably provide fluid power to two double-acting actuators. In embodiments the pairs of flexible hoses connected respectively to the two double-acting actuators may each be supplied from a common pair of hose unions as described herein. To this end preferably the third and fourth flexible, fluid-carrying hoses are capable of being differentially pressurized.

A single rigidifying member may interconnect each of the first, second, third and fourth clamps. One or more of the first, second, third and fourth clamps may be offset from each other in two dimensions. The two dimensions may be transverse or orthogonal to each other. The single rigidifying member may comprise an aperture through which a connection to the first pipe fitting and / or the second pipe fitting can be made.

In addition the invention resides in a torque-resisting hose mounting as defined herein and/or a hose or pipe network as defined herein, when installed in or forming part of a vehicle and when connected to a source and/or a drain of pressurized fluid, especially hydraulic oil. Such a vehicle non-exclusively is or includes an agricultural vehicle, especially a baling machine.

### Brief Description of the Drawings

There now follows a description of a preferred embodiment of the invention, by way of non-limiting example, with reference being made to the accompanying drawings in which:
Figure 1 that shows a perspective view of part of a fluid power hose/pipe network, according to the invention, including a torque-resisting hose mounting according to the invention;
Figure 2 shows in schematic, partly broken-away view of a vehicle, in the form of a baling machine, according to the invention;
Figure 3A shows an exploded view of a torque-resisting hose mounting according to an embodiment of the invention;
Figure 3B shows the hose mounting of Figure 3A assembled and secured to a vehicle;
Figure 4A shows an exploded view of a torque-resisting hose mounting according to another embodiment of the invention;
Figure 4B shows the hose mounting of Figure 4A assembled and secured to a vehicle; and
Figure 5 shows schematically a baling machine that has a torque-resisting hose mounting according to an embodiment of the invention mounted thereon.

### Detailed Description of the Drawings

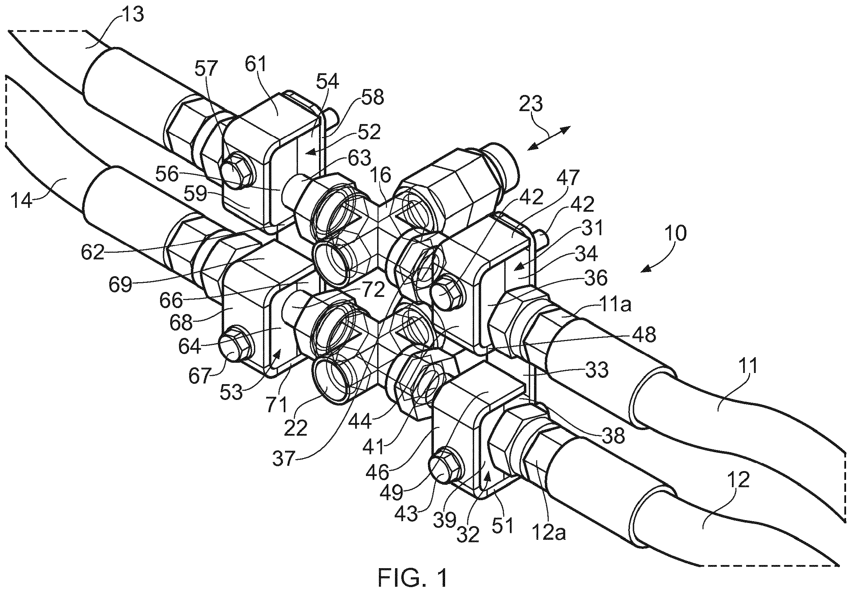

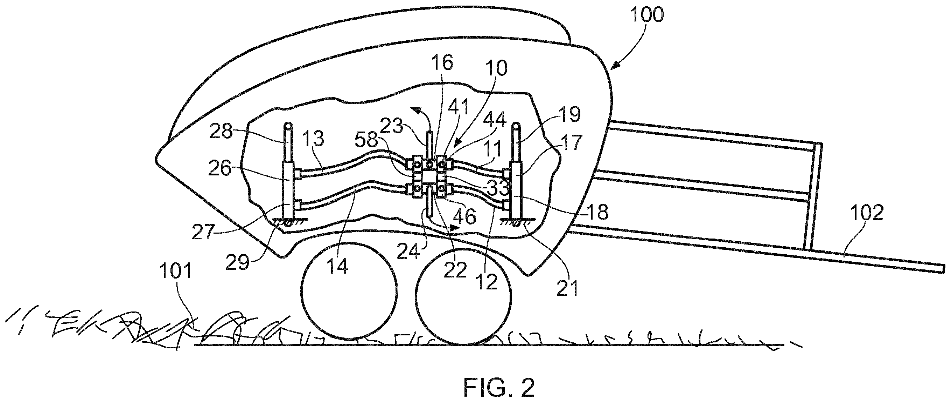

Referring to Figures 1 and 2 of the drawings a torque-resisting hose mounting 10 according to the invention includes at least first and second fluid-carrying hoses 11, 12 and, in the illustrated embodiment, optional third and fourth fluid-carrying hoses 13, 14.

First hose 11 at one end 11a is connected to a first pipe fitting in the form of a first pipe union 16 the arrangement of which is described in more detail below. Second hose 12 terminates in a similar manner at a second pipe union 22.

Third hose 13 is connected in a similar manner to the foregoing to an opposite side of first pipe union 16 to first hose 11; and fourth hose 14 is similarly connected to an opposite side to second hose 12 of second pipe union 22.

The various hoses 11, 12, 13, 14 are in the preferred embodiment hydraulic hoses, although they could in other embodiments be for example pneumatic hoses. The hoses 11, 12, 13, 14 are connected in a fluid power circuit, that in the preferred embodiment is a hydraulic circuit as further described below, in such a way that from time to time (or, conceivably, continuously) the fluid carried by respective pairs 11,12; 13, 14 of the hoses becomes differentially pressurized also as described below. The differential pressurizing in the absence of the features of the invention would tend to rotate parts of the fluid power circuit in a manner leading to fluid leaks and other failures as explained above.

One way this may occur is by reason of the first and second hoses 11, 12 being connected as shown in Figure 2 to respective ends of a first, double-acting hydraulic actuator 17 forming part of a vehicle 100.

The actuator 17 in a conventional manner includes a cylindrical actuator body 18 and an extensible and retractile actuator rod 19. An otherwise free end of the cylindrical body 18 is secured to e.g. a rigid frame member 21 forming part of the vehicle 100. An otherwise free end of the actuator rod 19 is secured to a moveable part of the vehicle 100 that it is required from time to time to move under the influence of the actuator 17. The moveable part is omitted from Figure 2 and may take any of a variety of forms.

The actuator 17 as is well known operates by causing controlled extension and retraction of the actuator rod 19. When extension is required controllable elements in the fluid power circuit cause fluid in the second hose 12 to become pressurized, thereby driving the actuator rod 19 outwardly from the cylindrical body 18.

Such movement of the actuator rod 19 is accommodated by simultaneous depressurizing or draining of the first hose 11.

Pressurizing of second hose 12 and depressurizing of first hose 11 are effected through alterations in the pressure of fluid in supply pipes or hoses 23, 24 connected as signified by arrows in Figure 2 to the remainder of the fluid power circuit. The precise means through which this can be achieved are known to the person of skill in the art and are not described in detail herein.

Retraction of the actuator rod 19 is effected by reversing the pressurizing and depressurizing of the flexible first and second hoses 11, 12 such that first hose 11 is pressurized and second hose 12 is depressurized. This condition may be achieved through operation of the aforesaid controllable parts of the fluid power circuit and result in fluid in supply hose 23 being pressurized and the pressure of fluid in supply hose 24 reducing.

The tendency of the first pipe union 16 to rotate is beneficially counteracted in the arrangement of the invention through the presence of first and second clamps 31, 32 and a rigidifying member in the form of a plate 33 that interconnects the first and second clamps 31, 32.

First clamp 31 in the illustrated embodiment includes a first pair of clamp jaws 34, 36 that in the illustrated embodiment are made from a resiliently deformable material such as rubber, a synthetic rubber or a resiliently deformable polymer.

Each jaw 34, 36 is essentially cuboidal in shape with a substantially rectangular face of the cuboid juxtaposed to a counterpart rectangular face of the other jaw of the pair.

A respective semicircular cross-section first clamp recess, that is not visible in the image of first clamp 31 in Figure 1, extends along each of the rectangular faces of the jaws 34, 36.

The semicircular first clamp recesses are in register with one another when the jaws 34, 36 are juxtaposed as shown in Figure 1 and thereby define a through-going circular cross-section bore. A first, rigid pipe 37 defines a hose extension extending from the end 11a of flexible hose 11 along the interior of the circular cross-section bore such that it is encircled and gripped by the clamp jaws 34, 36.

Second clamp 32 is formed somewhat similarly to first clamp 31, in that a second pair of clamp jaws 38, 39, that are formed e.g. from a resiliently deformable material that may be similar or identical to that of the jaws 34, 36, are cuboidal and define further mutually juxtaposed rectangular faces as illustrated.

Each of the rectangular faces is formed with an ovoid cross-section recess extending along its length. As a result when the jaws 38, 39 are juxtaposed with the ovoid cross-section recesses in register with one a through-going, oval cross-section slot is defined between them rather than the circular cross-section bore of the first clamp 31.

A second, rigid pipe 41 defines a hose extension extending from the end 12a of second flexible hose 12 that lies adjacent the second clamp 32 along the interior of the oval cross-section slot such that it is enclosed and gripped by the clamp jaws 38, 39. Gripping of the second rigid pipe 41 is similar to the gripping of first rigid pipe 37 except that the oval cross-section of the slot in which it is gripped accommodates variations in the vertical position of the second rigid pipe 41 relative to the first rigid pipe 37.

The recesses in the jaws 34, 36, 38 and 39 are dimensioned to receive and grip the rigid pipes 37, 41 that each is of lesser diameter than the flexible hose to which it is secured. However the rigid pipes in some embodiments of the invention are optional. Thus embodiments of the invention are possible in which the first and second clamps 31, 32 can be arranged directly to clamp onto and grip the ends 11a, 12a of the flexible hoses 11, 12 or e.g. rigid bushings secured over the ends 11a, 12a.

The rigid plate 33 is in the illustrated embodiment an elongate rectangle formed from a metal such as a steel, or from another rigid material. The rigid plate may take any of a range of forms and is not limited to the plate-like shape illustrated. Numerous variations will occur to the person of skill in the art.

The rigid plate 33 extends vertically in use of the illustrated embodiment to interconnect the first and second clamps 31, 32 on respective first sides thereof. The plate 33 is secured adjacent each of its ends to a respective one of the clamps 31, 32. In the illustrated embodiment this is achieved through use of respective fasteners in the form of threaded first and second bolts 42 (first clamp 31) and 43 (second clamp 32).

The respective bolts 42, 43 extend through the jaws 34, 36; 38, 39 of the first and second clamps 31, 32 by way of respective bores. These bores extend through the jaws 34, 36; 38, 39 at locations spaced from the bores defined by the recesses that as described above surround the rigid pipes 37, 41 and in directions transverse to (or essentially transverse to) the elongate dimensions of those recesses.

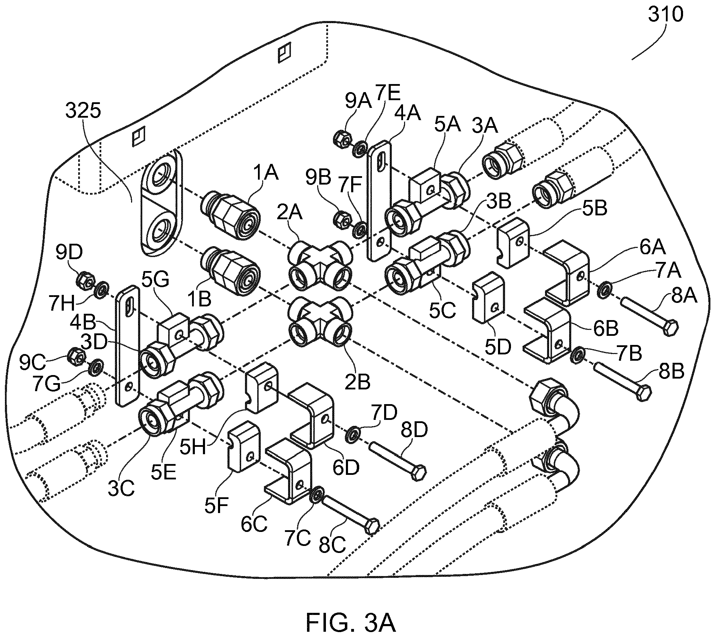

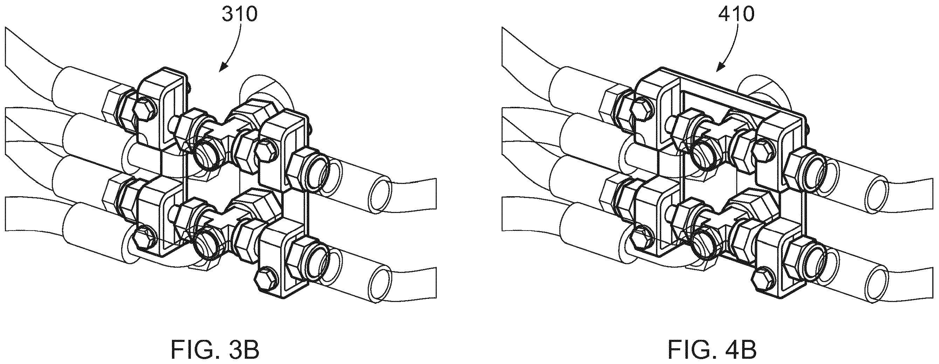

Each of the bolts 42, 43 is threadedly engaged with a nut, that is not visible in Figure 1 (although corresponding nuts are shown in Figure 3Awith reference numbers 9A-D), provided on the side of the rigid plate 33 lying remote from the associated first or second clamp 31, 32. The rigid plate 33 is perforated to permit the bolts to extend through it. Screwing of each bolt 41, 42 into the nut as a result compresses the jaws 34, 36; 38, 39 of the associated clamp 31, 32.

In Figure 2 the first bolt 42 is positioned to lie above the adjacent rigid pipe 37 in use of the hose mounting 10 and the second bolt 43 lies below the rigid pipe 41; but this need not be the case. On the contrary, the bolts may be provided in any of a variety of positions.

As an alternative to the provision of a separate nut as described, the perforations of the rigid plate 33 may be provided with internal threads, as the person of skill in the art readily will be able to envisage. A further possibility, that the person of skill in the art also will readily be able to embody, is to use so-called "weld nuts" secured by welding to the face of the rigid plate 33 that lies remote from the clamps 31, 32. Furthermore it is not necessary to employ nut and bolt combinations as described. Various alternative fastener types could be used. Some non-limiting examples are mentioned herein.

Each of the first and second clamps 31, 32 includes on its face opposite the rigid plate 33 a respective clamp brace 44, 46. Each clamp brace 44, 46 is a plate of a rigid material such as a metal (e.g. a steel) that is perforated to permit one of the bolts 42, 43 to extend therethrough. On assembly of the mounting 10 each clamp brace 44, 46 is thereby trapped between the head of the bolt 42, 43 passing through it and the adjacent clamp jaw 36, 39. The clamp brace in consequence acts in the manner of a washer to spread the clamping forces provided by the bolts 42, 43.

Each of the clamp braces 44, 46 is in the preferred embodiment formed as a U-section member as illustrated, with a respective pair of optional side walls 47, 48; 49, 51 extending from the plate defined by the respective clamp brace 44, 46 towards the rigidifying member represented by the rigid plate 33. The side walls 47, 48; 49, 51 are engageable with the rigid plate 33 on tightening of the bolts 42, 43 to limit the extent to which the clamp jaws 34, 36, 38, 39 are compressed together in use of the mounting 10. As a result the maximum clamping forces conferred on the rigid pipes 37, 41 are limited to values that avoid crushing of them.

The provision of a pair of the side walls in each case helps to ensure that the clamping forces are applied evenly to the clamp jaws 34, 36, 38, 39 but this is optional. In other embodiments of the invention more or fewer of the side walls, or equivalent features, may be provided.

Operation of the hose mounting 10 in the application described herein is as described above, with fluid in the supply hoses 23, 24 being pressurized or depressurized as needed, in dependence on commands generated in control equipment forming part of e.g. a vehicle 100 in which the mounting 10 is used. As explained such operation has tendency to cause rotation of the unions 16, 22, for example about vertical or horizontal axes. Such rotation causes leakage problems. Also, in some examples the unions 16, 22 can be associated with a vehicle such as a baling machine. The baling machine can rock back and forth while it is working in a field or when it is driving on a road. This rocking can also cause rotation of the unions 16, 22 that can result in leakage problems. The arrangement of the invention obviates such problems in the manner described herein.

The foregoing description relates primarily to the situation arising when a single actuator, such as actuator 17, is provided. In the embodiment illustrated in the figures however an optional second, double-acting actuator 26 is additionally provided at a location in the vehicle 100 that is spaced from the position of actuator 17.

Second double-acting actuator 26, having a cylindrical actuator body 27 and extensible and retractile actuator rod 28 is secured in an identical or similar manner to double-acting actuator 17. Thus an end of the cylindrical body 27 is secured to e.g. a further rigid frame member 29. The otherwise free end of actuator rod 28 is secured to a further moveable part that also is omitted from Figure 2. The further moveable part may take a variety of forms.

Third and fourth flexible, fluid carrying hoses 13, 14 are each connected at one end to the second actuator 26 in a similar manner to that of first and second flexible, fluid-carrying hoses 11, 12. As a result pressurizing of fourth hose 14 and depressurizing of third hose 13 causes extension of the actuator rod 28; and pressurizing of third hose 13 and depressurizing of fourth hose 14 causes retraction of the actuator rod 28.

Such pressurizing and depressurizing of fluid in the hoses 13, 14 is effected by reason of connection of the opposite ends of the hoses 13, 14 to those connected to the actuator 26 respectively to the unions 16, 22.

To this end the unions 16, 22 in the preferred but non-limiting embodiment are cruciform unions that adopt a cross-like shape when viewed in plan. The arrangement of conduits in the unions 16, 22 is such that fluid supplied or drained via the supply hoses 23, 24 passes via (in the case of union 16) both the first and third flexible, fluid-carrying hoses 11, 13; and (in the case of union 22) both the second and fourth flexible, fluid-carrying hoses 12, 14. As explained however the fittings to which the various hoses are connected may take a variety of other forms, and need not be a union as illustrated.

The third and fourth hoses 13, 14 are connected to the respective unions 16, 22 by arrangements that in effect are mirror images of the arrangements described above in respect of connection of the first and second hoses 11, 12.

Thus there are provided third and fourth clamps 52, 53 for connecting respectively the third hose 13 to the union 16 and the fourth hose 14 to the union 22.

Third clamp 52 includes fifth and sixth clamp jaws 54, 56 defining mutually juxtaposed faces having semicircular cross section recesses that define a circular cross-section bore that is similar to the counterpart feature of the first clamp 31. The clamp jaws 54, 56 by way of a fastener in the form of a nut and bolt combination 57 are compressed in use between a rigid plate 58 and a clamp brace 59.

Clamp brace 59 includes optional side walls 61, 62 extending towards the rigid plate 58, in like manner to the arrangement of the first clamp. A hose extension in the form of a rigid pipe 63 of lesser diameter than the third hose 13 to which it is communicatingly connected is clamped between the fifth and sixth clamp jaws 54, 56.

Fourth clamp 53 includes seventh and eighth clamp jaws 64, 66 defining mutually juxtaposed faces having ovoid cross section recesses that define an oval cross-section slot that is similar to the counterpart feature of the second clamp 32. The clamp jaws 64, 66 by way of a fastener also in the form of a nut and bolt combination 67 are compressed in use between rigid plate 58 and a further clamp brace 68.

Clamp brace 68 includes optional side walls 69, 71 extending towards the rigid plate 58, in like manner to the arrangement of the second clamp 32. A hose extension in the form of a rigid pipe 72 of lesser diameter than the fourth hose 14 to which it is communicatingly connected is clamped between the seventh and eighth clamp jaws 64, 66. As in the case of the second rigid pipe 41 the oval cross-section of the slot permits tolerancing in the position of the fourth rigid pipe 72 relative to third rigid pipe 63 to be accommodated.

Rigid plate 58 interconnects the third and fourth clamps 52, 53 in a similar manner to that of the rigid plate 33 interconnecting the first and second clamps 31, 32. As in the case of rigid plate 33, plate 58 may take a variety of forms that may differ from that shown.

Also in like manner to the arrangement of the first and second clamps 31, 32 the rigid pipes 63, 72 may be omitted and instead clamping may occur directly with respect to the third and fourth hoses 13, 14. Modifications of the various components as may be needed to achieve such an arrangement may be similar to the examples mentioned above and would be within the capability of the person of skill in the art.

Operation of the third and fourth clamps 52, 53 is analogous to that of the first and second clamps, such that torques tending to rotate either of the unions 16, 22 are resisted and/or counteracted as described above.

As mentioned the presence of the third and fourth hoses 13, 14 and the associated components is not mandatory; and it is possible to devise versions of the invention in which only a single pair of hoses such as first and second hoses 11, 12 is connected an appropriately altered pair of unions 16, 22.

Furthermore the flexible hoses 11, 12, 13 and 14 do not have to be connected so that they communicate with a fluid power circuit as represented by the supply hoses 23, 24. On the contrary, the unions 16 and/or 22 could in embodiments of the invention be replaced by hose terminations such as end caps that close off the hoses 11, 12 or 13, 14. Such terminations could be connected in rotation-resisting pairs by arrangements similar to those represented by the clamps and rigid plates of Figure 1, in accordance with the principles of the invention as explained herein. It would readily be within the ability of the person of skill in the art to devise such arrangements. Hose terminating also may be created in an arrangement such as that of Figure 1 when the pressure of fluid in the supply hoses 23, 24 is controlled e.g. using control elements to simulate the effect of capping termination of one or more of the fluid-carrying hoses 11, 12, 13, 14. Such embodiments are within the scope of the invention.

One example of a vehicle 100 in which the hose mounting of the invention may be employed is a baling machine as illustrated schematically in Figure 2. As is well known such a machine typically is a wheeled vehicle that is towed behind an agricultural tractor and that picks up straw 101 or other material to be baled that is lying in windrows in a field. Such a machine forms the straw into bales that are ejected via a bale chute 102 at the rear of the machine.

As is apparent from the cut-away section of Figure 2 the hose mounting 10 of the invention may readily be incorporated into such a machine 100 and operatively connected, as signified by the arrows in the figure, to a fluid power circuit forming part of the vehicle 100.

The invention however is not limited to installations of the hose mounting in a vehicle such as a baling machine as shown. On the contrary it may be included in a wide variety of vehicular and non-vehicular machines, including tractors and harvesting machines.

Vehicles as fall within the scope of the invention may include control elements and systems for controlling the pressure of fluid in parts of a fluid power circuit in which the mounting 10 of the invention is installed. Such control elements and systems may include programmable devices such as microprocessors, electronic controllers, hard-wired circuits, hydraulic, electrical and/or electrohydraulic logic circuits, gates and switches and derivatives of such features.

The fluid power circuit of a vehicle such as vehicle 100 typically but not necessarily would include one or more pumps, regulators, valves and filters. These have been omitted from the figures and would be present in practical embodiments to the extent required for successful achievement of the operational objectives of the vehicle 100.

Figure 3A shows an exploded view of a torque-resisting hose mounting 310 according to an embodiment of the invention, which is similar to the torque-resisting hose mounting of Figure 1. Figure 3B shows the hose mounting of Figure 3A assembled and secured to a vehicle.

In Figure 3A the sub-components of the torque-resisting hose mounting 310 are labelled with a part number and a letter. Sub-components that have the same number are the same type of part. Different letters are used to uniquely identify parts that are of the same type.

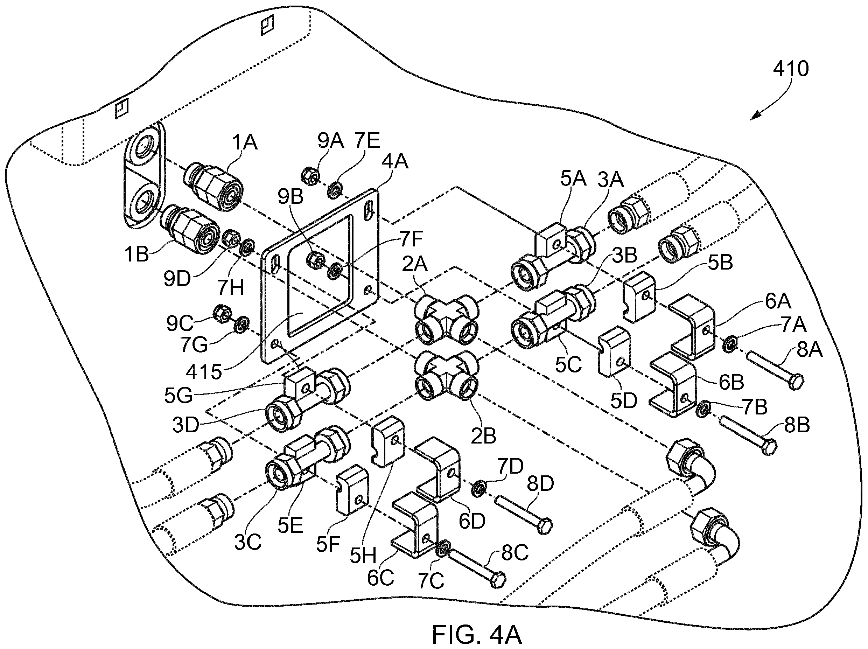

The torque-resisting hose mounting 310 of Figure 3A includes the following sub-components:
- Item 1 - screw-in fitting - quantity 2 - (A and B).
- Item 2 - cross coupling - quantity 2 - (A and B). These parts correspond to the pipe unions 16, 22 of Figure 1.
- Item 3 - hydraulic tube - quantity 4 - (A; B; C and D). These parts correspond to the ends of the hoses 11, 12, 13, 14 of Figure 1.
- Item 4 - flat metal connecting plate - quantity 2 - (A and B). These parts correspond to the rigid plates 33, 58 of Figure 1, although in Figure 3A each plate 4A-B has a round hole and a slotted hole as will be discussed below with reference to Figure 4A.
- Item 5 - rubber clamp - quantity 8 - (A; B; C; D; E; F; G and H).
   Four of these rubber clamps (5B, 5D, 5F, 5H) correspond to the clamp jaws 36, 39, 53, 56 in Figure 1, and can be considered as outer clamp jaws in that they are furthest from the flat metal connecting plates 4A, 4B. Each of these rubber clamps 5B, 5D, 5F, 5H have a circular cross-section recess in this example.
   The other four of these rubber clamps (5A, 5C, 5E, 5G) provide the functionality of the clamp jaws 34, 38, 54, 66, in Figure 1, and can be considered as providing the functionality of inner clamp jaws because they are closest to the flat metal connecting plates 4A, 4B. In contrast to the example of Figure 1, each of these inner rubber clamps 5A, 5C, 5E, 5G have a fully enclosed circular cross-section bore for communicating fluid from a hydraulic tube 3A, 3B, 3C, 3D through the rubber clamp 5A, 5C, 5E, 5G to a cross coupling 2A, 2B. Due to the presence of this bore through the inner rubber clamps 5A, 5C, 5E, 5G, each of the inner clamps has a circular cross-section protrusion on an outer surface of the clamp ("outer" in that it is furthest from the flat metal connecting plates 4A, 4B).
   The circular cross-section protrusions on the inner rubber clamps 5A, 5C, 5E, 5G align and register with the circular cross-section recesses on the outer rubber clamps 5B, 5D, 5F, 5H when the rubber clamps are secured together.
- Item 6 - Metal u-bracket for over the rubber clamp - quantity 4 - (A; B; C and D). These parts correspond to the clamp braces 44, 46, 59, 68 of Figure 1.
- Item 7 - Washer - quantity 8 - (A; B; C; D; E; F; G and H). These parts are not described with reference to Figure 1. As is known in the art, the washers 8A-H can assist with the adjacent nut 9A-D or head of the bolt 8A-D providing an even distribution of pressure on the respective connecting plate 4A-B or the metal u-bracket 6A-D.

- Item 8 - Bolt - quantity 4 - (A; B; C and D). These parts correspond to the bolts 42, 43, 57, 67 of Figure 1.
- Item 9 - Lock nut - quantity 4 - (A, B, C and D). As indicated above, the corresponding nuts that are used in the mounting of Figure 1 are not visible in Figure 1.

The screw-in fittings 1A, 1B can be used to secure the torque-resisting hose mounting 310 to a panel 325, such as a panel of a vehicle. Each of the screw-in fittings 1A, 1B has an axial dimension about which the associated cross coupling 2A, 2B could rotate if it were not secured. In this example, the axial dimension defines a potential horizontal axis of rotation of the cross coupling 2A, 2B. As indicated above, such rotation can lead to undesired leaks. However, the presence of the flat metal connecting plates 4A, 4B can reduce or prevent the rotation of the cross couplings 2A, 2B about this horizontal axis, especially when the hydraulic tubes 3A and 3B (and 3C and 3D) are differentially pressurized.

Provided below in an example of how the sub-components of the torque-resisting hose mounting 310 of Figure 3A can be assembled:
i. Start with confirm item 1 - screw-in fitting - number 2x.
ii. Assemble Item 3A and 3D - Hydraulic tube on item 2A - Cross coupling.
iii. Assemble Item 3B and 3C - Hydraulic tube on item 2B - Cross coupling.
iv. Mounting the Cross coupling 2A on the screw-in fitting 1A - horizontal.
v. Mounting the Cross coupling 2B on the screw-in fitting 1B - horizontal.
vi. Placing on bolt 8A - washer 7A - U-bracket 6A - rubber outer clamp jaw 5B (that can be considered as having a half rounding over hydraulic tube 3A) - rubber inner clamp jaw 5A (that can also be considered as having a rounding over the tube 3A) - then the slotted hole of the flat metal connecting plate 4A - again a washer 7E - and finally locknut 9A.
vii. Same assembly for bolt 8B - washer 7B positioning - U-bracket 6B - rubber outer clamp jaw 5D (that can be considered as having a half rounding over hydraulic tube 3B) - rubber inner clamp jaw 5C (that can be considered as having a rounding over the tube 3B) - then the round hole of the flat metal connecting plate 4A - back washer 7F and finally lock nut 9B.
viii. Same assembly for bolt 8D - washer 7D places - U-bracket 6D - rubber outer clamp jaw 5H (that can eb considered as having a semi-rounding over hydraulic tube 3D) - rubber inner clamp jaw 5G (that can be considered as having a rounding over the tube 3D) - then the slotted hole of the flat metal connecting plate 4B - again a washer 7H and to place as the last lock nut 9D.
ix. Same mounting for bolt 8C - washer 7C places - U-bracket 6C - rubber outer clamp jaw 5F (that can be considered as having a semi-rounding over tube 3C) - rubber inner clamp jaw 5E (that can be considered as having a rounding over the tube 3C) - then the round hole of the flat metal connecting plate 4B - back a washer 7G - and to place as the last lock nut 9C.

Figure 4A shows an exploded view of a torque-resisting hose mounting 410 according to an embodiment of the invention, which is similar to the torque-resisting hose mounting of Figure 3A. Figure 4B shows the hose mounting of Figure 4A assembled and secured to a vehicle.

In Figure 4A the two flat metal connecting plates (items 4A and 4B in Figure 3A), have been replaced with one plate 4A. The plate 4A is an example of a rigidifying member. In this example, the single rigidifying plate 4A interconnects four clamps. The four clamps are provided by the items labelled 5A-5H in Figure 4A, as described above with reference to the corresponding components of Figure 3A. In this way, the plate 4A of Figure 4A can interconnect clamps that are offset from each other in two dimensions. In Figure 4A the two dimensions are transverse to each other, and can be generally orthogonal to each other.

In the example of Figure 4A, the plate 4A has an aperture 415 through which a connection to the cross couplings 2A, 2B can be made. For example the screw-in fittings 1A, 1B (or any other fastening means) can pass through the aperture 415 to secure the hose mounting 410 to a vehicle. In some examples, the connection through the aperture 415 may provide a fluidic connection to or from the hose mounting 410.

The plate 4A has two round holes and two slotted holes, through which fasteners can pass to secure the clamps 5A-H to the plate 4A. In this example, the fasteners are provided by nut and bolt combinations 8A-D, 9A-D. The slotted holes are elongated in a dimension that is towards a corresponding round hole. In this way, relative spacing of the clamps 5A-H can be adjusted by varying the position of the slotted holes through which the fasteners are located. It will be appreciated that the plate 4A can have other structures / arrangements that allow the position on the rigidifying member at which the clamps 5A-H to be variable with respect to each other.

In this way, the clamps 5A-H are fixedly secured to the connecting plates 4A, 4B when the hose mounting is in an assembled configuration. In a disassembled or partially assembled configuration, the connecting plates 4A, 4B have a structure that allows the position on the connecting plates 4A, 4B at which the clamps 5A-H are to be fixedly secured to be variable with respect to each other. This structure may include both round and slotted holes through which fasteners can pass to secure the clamps 5A-H to the connecting plates 4A, 4B.

For any of the examples disclosed herein that include a rigidifying member that has a round hole for receiving a bolt (such as the round holes in the plates shown in Figures 3A and 4A), the rigidifying member may comprise a weld nut attached to the rigidifying member at the location of the round hole. In this way, the weld nut can be used to secure a bolt in a desired position. For the example of Figure 4A, this would mean that the number of lock nuts would reduce to two because lock nuts 9C and 9B would not be required. In some applications, spring washers can be used as part of the fastening means that includes the weld nuts - for instance, instead of the normal washers indicated by 7B and 7C at the head of the bolts 8B, 8C that are to be secured to the weld nuts.

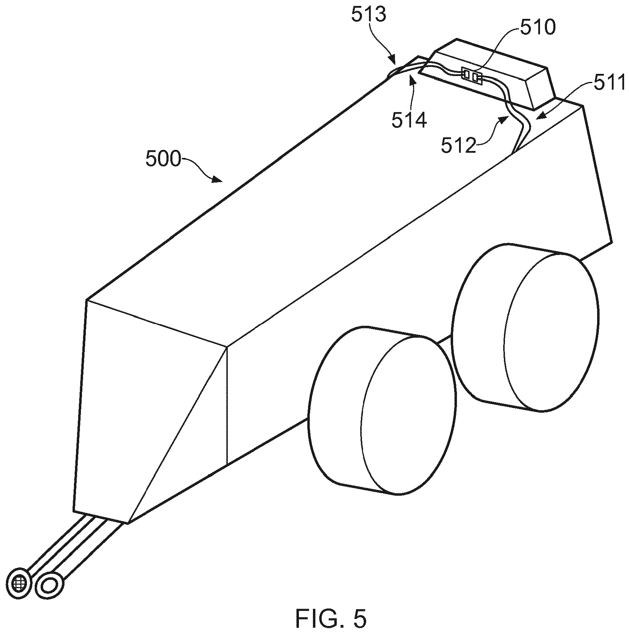

Figure 5 shows schematically a baling machine 500 that has a torque-resisting hose mounting 510 according to an embodiment of the invention mounted thereon.

Shown in Figure 5 are four hoses 511, 512, 513, 514 that are connected to the torque-resisting hose mounting 510 in the same way as described above. In some examples, the hoses 511, 512, 513, 514 are used or provide fluid to actuators (not shown) that are associated with walls of a bale chamber. In this way, the walls can be moved to increase or decrease the volume of the bale chamber.

## Claims

1. A torque-resisting hose mounting (10) for attenuating torque arising when at least first and second flexible, fluid-carrying hoses (11,12) each connected in a fluid-communicating manner with a pipe fitting (16,22) are differentially pressurized, **characterized in that** the torque-resisting hose mounting (10) comprises:
a. a first pipe fitting (16) to which a first flexible, fluid-carrying hose (11) is directly or indirectly connectable;
b. a second pipe fitting (22) to which a second flexible, fluid-carrying hose (12) is directly or indirectly connectable;
c. a first clamp (31) comprising a first pair of clamp jaws (34, 36) for gripping the first flexible hose (11) or a first hose extension connected thereto;
d. a second clamp (32) comprising a second pair of clamp jaws (38, 39) for gripping the second flexible hose (12) or a second hose extension connected thereto; and
e. a rigidifying member (33) interconnecting the first and second clamps (31,32), **characterised in that** each jaw (34, 36, 38, 39) is essentially cuboidal in shape with a substantially rectangular face of the cuboid juxtaposed to a counterpart rectangular face of the other jaw of the respective pair.

2. A torque-resisting hose mounting (10) according to Claim 1 wherein:
the first hose extension when present includes a first rigid pipe (37) for connecting the first pipe fitting (16) and the first hose (11) in fluid-transferring communication with one another; and
the second hose extension when present includes a second rigid pipe (41) for connecting the second pipe fitting (22) and the second hose (12) in fluid-transferring communication with one another.

3. A torque-resisting hose mounting (10) according to Claim 2 wherein the first rigid pipe (37) is of lesser diameter than the first hose (11) and the second rigid pipe (41) is of lesser diameter than the second hose (12).

4. A torque-resisting hose mounting (10) according to Claim 2 or Claim 3 wherein:
the first clamp (31) includes a first pair of resiliently deformable clamp jaws (34,36) between which the first rigid pipe (37) is capable of being gripped and defining a through-going circular cross-section bore for receiving the first rigid pipe (37); and / or
the second clamp (32) includes a second pair of resiliently deformable clamp jaws (38,39) between which the second rigid pipe (41) is capable of being gripped and defining a through-going, elongate slot for receiving the second rigid pipe (41).

5. A torque-resisting hose mounting (10) according to any preceding claim wherein the rigidifying member (33) is connected to a respective first side of each of the first and second clamps (31,32).

6. A torque-resisting hose mounting (10) according to Claim 5 when dependent from Claim 4 wherein each of the first and second clamps (31,32) includes a respective clamp brace (44,46) juxtaposed to the clamp on the opposite side to the connection of the rigidifying member (33), and wherein each of the first and second clamps (31,32) includes a respective fastener (42,43) extending from one side of the clamp to another to secure the clamp brace (44,46) and the rigidifying member (33) one to the other against the resilient deformability of the clamp (31,32) and with the clamp trapped therebetween.

7. A torque-resisting hose mounting (10) according to Claim 6 wherein at least one said clamp brace (44,46) includes at least one side wall (47,48,49,51) extending from the clamp brace towards a said rigidifying member (33) externally of the clamp (31,32).

8. A torque-resisting hose mounting (10) according to any preceding claim wherein the first and second pipe fittings (16,22) are respective pipe terminations.

9. A torque-resisting hose mounting (10) according to any preceding claim wherein the first and second pipe fittings (16,22) are respective pipe unions.

10. A torque-resisting hose mounting (10) according to any preceding claim wherein the first flexible, fluid-carrying hose (11) is connected to provide pressurized fluid to a first end (11a) of a double-acting fluid actuator (17); and the second flexible, fluid-carrying hose (12) is connected to provide pressurized fluid to a second end (12a) of the double-acting fluid actuator (17).

11. A hose or pipe network including a first torque-resisting hose mounting (10) according to any of Claims 1 to 7, 9 or 10, wherein the first pipe fitting (16) is a pipe union to which is additionally connectable a third flexible, fluid-carrying hose (13); wherein the second pipe fitting (22) is a pipe union to which is additionally connectable a fourth flexible, fluid-carrying hose (14); and wherein the hose or pipe network includes a second torque-resisting hose mounting comprising:
f. the first pipe fitting (16);
g. the second pipe fitting (22);
h. a third clamp (52) for gripping the third rigid pipe (63) or a third extension connected thereto;
i. a fourth clamp (53) for gripping the fourth rigid pipe (72) or a fourth extension connected thereto; and
j. a rigidifying member (58) interconnecting the third and fourth clamps (52,53).

12. A hose or pipe network according to Claim 11, wherein a single rigidifying member interconnects each of the first, second, third and fourth clamps (31, 32, 52, 53).

13. A hose or pipe network according to Claim 12, wherein the single rigidifying member comprises an aperture (415) through which a connection to the first pipe fitting (16) and / or the second pipe fitting (22) can be made.

14. A hose or pipe network according to any one of Claims 11 to 13 wherein the third and fourth flexible, fluid-carrying hoses (13,14) are capable of being differentially pressurized.

15. A vehicle (100) including a torque-resisting hose mounting (10) according to any of Claims 1 to 10 and/or a hose or pipe network according to any one of Claims 11 to 14, and connected to a source and/or a drain of pressurized fluid.

## Patentansprüche

1. Drehmomentresistente Schlauchbefestigung (10) zum Verringern des Drehmoments, das entsteht, wenn mindestens ein erster und ein zweiter flexibler, fluidführender Schlauch (11, 12), die jeweils mit einem Anschlussstück (16, 22) in Fluidverbindung stehen, mit unterschiedlichen Drücken beaufschlagt sind, **dadurch gekennzeichnet, dass** die drehmomentresistente Schlauchbefestigung (10) umfasst:
a. ein erstes Anschlussstück (16), mit dem ein erster flexibler, fluidführender Schlauch (11) direkt oder indirekt verbindbar ist;
b. ein zweites Anschlussstück (22), mit dem ein zweiter flexibler, fluidführender Schlauch (12) direkt oder indirekt verbindbar ist;
c. eine erste Klemmeinrichtung (31), die ein erstes Paar von Klemmbacken (34, 36) umfasst, um den ersten flexiblen Schlauch (11) oder eine damit verbundene erste Schlauchverlängerung einzuspannen;
d. eine zweite Klemmeinrichtung (32), die ein zweites Paar von Klemmbacken (38, 39) umfasst, um den zweiten flexiblen Schlauch (12) oder eine damit verbundene zweite Schlauchverlängerung einzuspannen;
e. ein Versteifungselement (33), das die erste und die zweite Klemmeinrichtung (31, 32) miteinander verbindet, **dadurch gekennzeichnet, dass** jede Klemmbacke (34, 36, 38, 39) im Wesentlichen quaderförmig ist, wobei eine im Wesentlichen rechteckige Fläche des Quaders einer rechteckigen Gegenfläche der anderen Klemmbacke des entsprechenden Paares gegenüberliegt.

2. Drehmomentresistente Schlauchbefestigung (10) nach Anspruch 1, wobei:
die erste Schlauchverlängerung, falls vorhanden, ein erstes steifes Rohr (37) umfasst, um das erste Anschlussstück (16) mit dem ersten Schlauch (11) in fluidübertragender Weise zu verbinden; und
die zweite Schlauchverlängerung, falls vorhanden, ein zweites steifes Rohr (41) umfasst, um das zweite Anschlussstück (22) mit dem zweiten Schlauch (12) in fluidübertragender Weise zu verbinden.

3. Drehmomentresistente Schlauchbefestigung (10) nach Anspruch 2, wobei das erste steife Rohr (37) einen kleineren Durchmesser als der erste Schlauch (11) aufweist und das zweite steife Rohr (41) einen kleineren Durchmesser als der zweite Schlauch (12) aufweist.

4. Drehmomentresistente Schlauchbefestigung (10) nach Anspruch 2 oder Anspruch 3, wobei:
die erste Klemmeinrichtung (31) ein erstes Paar von elastisch verformbaren Klemmbacken (34, 36) aufweist, zwischen denen das erste steife Rohr (37) eingespannt werden kann und die eine Durchgangsbohrung mit kreisförmigem Querschnitt zum Aufnehmen des ersten steifen Rohres (37) aufweisen; und/oder
die zweite Klemmeinrichtung (32) ein zweites Paar von elastisch verformbaren Klemmbacken (38, 39) aufweist, zwischen denen das zweite steife Rohr (41) eingespannt werden kann und die einen durchgehenden Längsschlitz zum Aufnehmen des zweiten steifen Rohres (41) aufweisen;

5. Drehmomentresistente Schlauchbefestigung (10) nach einem der vorhergehenden Ansprüche, wobei das Versteifungselement (33) mit einer entsprechenden Seite der ersten und der zweiten Klemmeinrichtung (31, 32) verbunden ist.

6. Drehmomentresistente Schlauchbefestigung (10) nach Anspruch 5 in Abhängigkeit von Anspruch 4, wobei sowohl die erste als auch die zweite Klemmeinrichtung (31, 32) eine jeweilige Klemmeinrichtungs-Klammer (44, 46) umfasst, die neben der Klemmeinrichtung auf der gegenüberliegenden Seite der Verbindung des Versteifungselements (33) angeordnet ist und wobei sowohl die erste als auch die zweite Klemmeinrichtung (31, 32) ein jeweiliges Befestigungselement (42, 43) umfasst, das sich von einer Seite der Klemmeinrichtung zu der anderen erstreckt, um die Klemmeinrichtungs-Klammer (44, 46) und das Versteifungselement (33) gegen die elastische Verformbarkeit der Klemmeinrichtung (31, 32) und mit der dazwischen eingeklemmten Klemmeinrichtung zueinander zu verbinden.

7. Drehmomentresistente Schlauchbefestigung (10) nach Anspruch 6, wobei mindestens eine Klemmeinrichtungs-Klammer (44, 46) mindestens eine Seitenwand (47, 48, 49, 51) umfasst, die sich außerhalb der Klemmeinrichtung (31, 32) von der Klemmeinrichtungs-Klammer in Richtung des Versteifungselements (33) erstreckt.

8. Drehmomentresistente Schlauchbefestigung (10) nach einem der vorhergehenden Ansprüche, wobei das erste und das zweite Anschlussstück (16, 22) entsprechende Endstücke sind.

9. Drehmomentresistente Schlauchbefestigung (10) nach einem der vorhergehenden Ansprüche, wobei das erste und das zweite Anschlussstück (16, 22) entsprechende Rohrverbindungsstücke sind.

10. Drehmomentresistente Schlauchbefestigung (10) nach einem der vorhergehenden Ansprüche, wobei der erste flexible, fluidführende Schlauch (11) verbunden ist, um mit Druck beaufschlagtes Fluid an einem ersten Ende (11a) einer doppelt wirkenden Fluidbetätigungseinrichtung (17) bereitzustellen; und der zweite flexible, fluidführende Schlauch (12) verbunden ist, um mit Druck beaufschlagtes Fluid an einem zweiten Ende (12a) der doppelt wirkenden Fluidbetätigungseinrichtung (17) bereitzustellen.

11. Schlauch- oder Rohrnetz mit einer ersten drehmomentresistenten Schlauchbefestigung (10) nach einem der Ansprüche 1 bis 7, 9 oder 10, wobei das erste Anschlussstück (16) ein Rohrverbindungsstück ist, mit dem zusätzlich ein dritter flexibler, fluidführender Schlauch (13) verbindbar ist; wobei das zweite Anschlussstück (22) ein Rohrverbindungsstück ist, mit dem zusätzlich ein vierter flexibler, fluidführender Schlauch (14) verbindbar ist; und wobei das Schlauch- oder Rohrnetz eine zweite drehmomentresistente Schlauchbefestigung umfasst mit:
f. dem ersten Anschlussstück (16);
g. dem zweiten Anschlussstück (22);
h. einer dritten Klemmeinrichtung (52), um das dritte steife Rohr (63) oder eine dritte damit verbundene Verlängerung einzuspannen;
i. einer vierten Klemmeinrichtung (53), um das vierte steife Rohr (72) oder eine vierte damit verbundene Verlängerung einzuspannen; und
j. ein Versteifungselement (58), das die dritte und vierte Klemmeinrichtung (52, 53) miteinander verbindet.

12. Schlauch- oder Rohrnetz nach Anspruch 11, wobei ein einzelnes Versteifungselement jeweils die erste, zweite, dritte und vierte Klemmeinrichtung (31, 32, 52, 53) miteinander verbindet.

13. Schlauch- oder Rohrnetz nach Anspruch 12, wobei das einzelne Versteifungselement eine Öffnung (415) aufweist, durch die eine Verbindung zu dem ersten Anschlussstück (16) und/oder dem zweiten Anschlussstück (22) hergestellt werden kann.

14. Schlauch- oder Rohrnetz nach einem der Ansprüche 11 bis 13, wobei der dritte und vierte flexible, fluidführende Schlauch (13, 14) mit unterschiedlichen Drücken beaufschlagt werden können.

15. Fahrzeug (100) mit einer drehmomentresistenten Schlauchbefestigung (10) nach einem der Ansprüche 1 bis 10 und/oder einem Schlauch- oder Rohrnetz nach einem der Ansprüche 11 bis 14, und mit einer Quelle und/oder einem Abfluss von mit Druck beaufschlagten Fluid verbunden.

## Revendications

1. Support de tuyau résistant au couple (10) permettant d'atténuer le couple survenant lorsqu'au moins des premier et deuxième tuyaux flexibles (11,12) transportant des fluides, chacun connecté de manière à communiquer fluidiquement avec un raccord de tuyau (16,22), sont pressurisés de manière différentielle, **caractérisé en ce que** le support de tuyau résistant au couple (10) comprend :
a. un premier raccord de tuyau (16) auquel un premier tuyau flexible (11) transportant des fluides peut être raccordé directement ou indirectement ;
b. un deuxième raccord de tuyau (22) auquel un deuxième tuyau flexible (12) transportant des fluides peut être raccordé directement ou indirectement ;
c. un premier serrage (31) comprenant une première paire de mâchoires de serrage (34, 36) pour saisir le premier tuyau flexible (11) ou une première extension de tuyau raccordée à celui-ci ;
d. un deuxième serrage (32) comprenant une deuxième paire de mâchoires de serrage (38, 39) pour saisir le deuxième tuyau flexible (12) ou une deuxième extension de tuyau qui est raccordée à celui-ci ; et
e. un élément de rigidification (33) reliant le premier et le deuxième serrage (31, 32), **caractérisé par le fait que** chaque mâchoire (34, 36, 38, 39) est essentiellement de forme cuboïde avec une face sensiblement rectangulaire du cuboïde juxtaposée à une face rectangulaire homologue de l'autre mâchoire de la paire respective.

2. Support de tuyau résistant au couple (10) selon la revendication 1, dans lequel :
la première extension de tuyau, lorsqu'elle est présente, comprend un premier tuyau rigide (37) pour connecter le premier raccord de tuyau (16) et le premier tuyau (11) en communication de transfert de fluide l'un avec l'autre ; et
la deuxième extension de tuyau, lorsqu'elle est présente, comprend un deuxième tuyau rigide (41) pour connecter le deuxième raccord de tuyau (22) et le deuxième tuyau (12) en communication de transfert de fluide l'un avec l'autre.

3. Support de tuyau résistant au couple (10) selon la revendication 2, dans lequel le premier tuyau rigide (37) a un diamètre inférieur à celui du premier tuyau (11) et le deuxième tuyau rigide (41) a un diamètre inférieur à celui du deuxième tuyau (12).

4. Support de tuyau résistant au couple (10) selon la revendication 2 ou la revendication 3, dans lequel :
le premier serrage (31) comprend une première paire de mâchoires de serrage (34, 36) élastiquement déformables entre lesquelles le premier tuyau rigide (37) peut être saisi et définissant un orifice de section circulaire transversal pour recevoir le premier tuyau rigide (37) ; et/ou
le deuxième serrage (32) comprend une deuxième paire de mâchoires de serrage (38, 39) élastiquement déformables entre lesquelles le deuxième tuyau rigide (41) peut être saisi et définissant une fente allongée traversante pour recevoir le deuxième tuyau rigide (41).

5. Support de tuyau résistant au couple (10) selon l'une quelconque des revendications précédentes, dans lequel l'élément de rigidification (33) est relié à un premier côté respectif de chacun des premier et deuxième serrages (31, 32).

6. Support de tuyau résistant au couple (10) selon la revendication 5 lorsqu'elle dépend de la revendication 4, dans lequel chacun des premier et deuxième serrages (31, 32) comprend une attache de serrage respective (44, 46) juxtaposée au serrage du côté opposé à la connexion de l'élément de rigidification (33), et dans lequel chacun des premier et deuxième serrages (31,32) comprend un élément de fixation respectif (42,43) s'étendant d'un côté à l'autre du serrage pour fixer l'attache de serrage (44,46) et l'élément de rigidification (33) l'un à l'autre contre la déformation élastique du serrage (31,32) et avec le serrage coincé entre les deux.

7. Support de tuyau résistant au couple (10) selon la revendication 6, dans lequel au moins une des attaches de serrage (44, 46) comprend au moins une paroi latérale (47, 48, 49, 51) s'étendant de l'attache de serrage vers ledit élément de rigidification (33) à l'extérieur du serrage (31, 32).

8. Support de tuyau résistant au couple (10) selon l'une quelconque des revendications précédentes, dans lequel les premier et deuxième raccords de tuyau (16, 22) sont des terminaisons de tuyau respectives.

9. Support de tuyau résistant au couple (10) selon l'une quelconque des revendications précédentes, dans lequel les premier et deuxième raccords de tuyau (16, 22) sont des raccords de tuyaux respectifs.

10. Support de tuyau résistant au couple (10) selon l'une quelconque des revendications précédentes, dans lequel le premier tuyau flexible (11) transportant un fluide est connecté pour fournir un fluide sous pression à une première extrémité (11a) d'un actionneur de fluide à double effet (17) ; et le deuxième tuyau flexible (12) transportant un fluide est connecté pour fournir un fluide sous pression à une seconde extrémité (12a) de l'actionneur de fluide à double effet (17).

11. Tuyau ou réseau de tuyaux comprenant un premier support de tuyau résistant au couple (10) selon l'une des revendications 1 à 7, 9 ou 10, dans lequel le premier raccord de tuyau (16) est un raccord de tuyau auquel est également raccordé un troisième tuyau flexible transportant un fluide (13) ; dans lequel le deuxième raccord de tuyau (22) est un raccord de tuyau auquel est également raccordé un quatrième tuyau flexible transportant un fluide (14) ; et dans lequel le tuyau ou le réseau de tuyaux comprend un deuxième support de tuyau résistant au couple, comprenant :
f. le premier raccord de tuyau (16) ;
g. le deuxième raccord de tuyau (22) ;
h. un troisième serrage (52) pour saisir le troisième tuyau rigide (63) ou une troisième extension qui est reliée à celui-ci ;
i. un quatrième serrage (53) pour saisir le quatrième tuyau rigide (72) ou une quatrième extension qui est reliée à celui-ci ; et
j. un élément de rigidification (58) reliant les troisième et quatrième serrages (52, 53).

12. Tuyau ou réseau de tuyaux selon la revendication 11, dans lequel un seul élément de rigidification relie chacun des premier, deuxième, troisième et quatrième serrages (31, 32, 52, 53).

13. Tuyau ou réseau de tuyaux selon la revendication 12, dans lequel l'élément de rigidification unique comprend une ouverture (415) à travers laquelle une connexion au premier raccord de tuyau (16) et/ou au deuxième raccord de tuyau (22) peut être effectuée.

14. Tuyau ou réseau de tuyaux selon l'une quelconque des revendications 11 à 13, dans lequel les troisième et quatrième tuyaux flexibles (13,14) transportant des fluides peuvent être pressurisés de manière différentielle.

15. Véhicule (100) comprenant un support de tuyau résistant au couple (10) selon l'une quelconque des revendications 1 à 10 et/ou un tuyau ou un réseau de tuyaux selon l'une quelconque des revendications 11 à 14, et connecté à une source et/ou à un drain de fluide sous pression.
